# EUROPEAN PATENT APPLICATION

(11) **EP 1 741 529 A1**
(43) Date of publication of application: **10.01.2007**
(21) Application number: 05717204.1
(22) Date of filing: 09.03.2005
(51) Int. Cl.: B27L 1/00, B27L 1/06

(54) **DEBARKING MODULE WHICH CAN BE CONNECTED TO A POWER CHAIN SAW AND DEBARKING POWER CHAIN SAW**

(30) Priority: 09.03.2004 ES 200400659; 15.06.2004 ES 200401457; 12.07.2004 ES 200401692
(71) Applicant: Gurri Mollins, Josep, 08140 Caldes de Montbui (ES)
(72) Inventor: Gurri Mollins, Josep, 08140 Caldes de Montbui (ES)
(74) Representative: Gislon, Gabriele
(86) International application number: PCT/ES2005/000121
(87) International publication number: WO 2005/087463

(57) **Abstract**

The module comprises moveable stop means (2) adapted to be coupled to a support bar (1) o a chain saw by guide means (3) and disposed to make contact on an exterior surface of a tree bark (A), actuation means (4) adapted to move said stop means (2) in relation to a distal end of the bar (1), a powered electric or electronic circuit (17) and connection means (22, 23) to connect a first point of said electric or electronic circuit (17) to an electro-conductive needle (5) insertable into the tree trunk to the mother bark (B) and a second point to the bar (1). In response to variations in the electrical conductivity between the needle (5) and the bar (1), an activation and control signal is generated for said actuation means to move the stop means (2) in order to regulate the penetration depth of said bar (1).

## Description

### Scope of the invention

This invention concerns a debarking module which can be connected to a power chain saw that has applications, for example, in the in cork removal operations to make the necessary cuts in the bark of cork oaks. The present invention also concerns a debarking accessory for a power chain saw and a debarking power chain saw that is fitted with such a debarking module.

### Technical Background

Patent FR-A-2621396, presented on the 14^{th} of July 1989, describes an electric impedance measuring device, in particular, the impedance of tree sap, which comprises an electronic circuit connected to a pair of electrodes prepared for connection to various parts of a tree. This measuring device is used to determine either the vigour of a tree, or the evolution of the constituent tissues from the evolution of the sap's electrical resistance or the tissues subjected to this measurement.

Patent ES-A-2113823, presented on the 26^{th} of March 1996 and in the public domain, publishes a method for establishing the depth of a cork oak bark, together with a cork removal process that employs said method in order not to harm the tree. The method consists of detecting differences in conductivity in an electric circuit created between two electrodes through the tree trunk. To this end, it employs an electronic circuit with one side connected to an electrode capable of penetrating the tree trunk to the cambium or mother bark and with the other side connected to a sensor capable of penetrating the cork. Since the cork is electro-insulating, the cork layer thickness can be detected from the sensor penetration depth because a sudden increase in conductivity will be detected when the sensor approaches the mother bark. The process comprises a power cutting tool fitted with a cutting disc or other suitable tool for cutting the cork, where said cutting tool is made of an electro-conducting material and serves as the cited sensor. The tool includes a drive motor for said cutting disc, together with a mechanism configured to vary the cutting depth of the electro-conductive material disk. One point of the cited electronic circuit is connected to an electro-conductive needle that can penetrate the tree trunk to the cambium acting as said electrode, with the other point connected to the cutting tool. The cited cutting depth regulating mechanism is controlled by a signal from the electronic circuit.

Patent document WO 99/41051, with priority dated the 13^{th} of February 1998 and in the public domain, describes a portable debarking machine comprising a first electric motor adapted to action a metal cutting blade in a rocking fashion and configured to cut into said bark, and a second electric motor adapted to drive a movable stop disposed as to come into contact with the surface of said bark. The position of said movable stop can be varied by the second electric motor in relation to a distal end of the cutting blade in order to regulate the cutting depth. The machine also comprises a high-electrical conductivity needle supported by a handle and which can be inserted into said trunk of the tree to be debarked up to the cambium or mother bark. An electric power supply feeds an electronic circuit with a microprocessor and wiring connects two points of said electronic circuit with the metal cutting blade and said needle respectively. This produces a flow of electricity through the mother bark between the needle and the cutting blade. The cited microprocessor is adapted to generate a control signal for the second electric motor in order to change the cited position of the movable stop in accordance with variations in electrical conductivity detected between the needle and cutting blade. The cutting blade and movable stop, together with their corresponding first and second electric motors, are installed in a first unit that includes a casing fitted with a handle that can be manually gripped by a user, while a second unit contains the electronic circuit and a rechargeable battery disposed to supply electric power to the electric motors and the detection current to the needle. Both first and second units are connected together by power and signal wiring.

One drawback of the machine described in the cited patent document WO 99/41051 is that, since the metal cutting blade is provided with a rocking motion and that the conductivity detection is performed by actual cutting blade, the electronic circuit must cyclically calculate an average conductivity between those detected by the cutting blade when it is in the position of maximum retraction and those detected in the position of maximum extension. This can generate errors in the movable stop positioning signal, especially under conditions of high tree moisture and can lead to unwanted damage to the mother bark, which could take years to heal and which generally produce defects in the regenerated bark to be obtained in the following removal.

Another drawback is the cutting capacity of a fretsaw blade with rocking motion is limited and is insufficient for acceptable production.

Another drawback is that the charge that be accumulated in an easily transported battery is insufficient to power the electric drive motor for the saw during a full day's work, which means spare batteries are required, with the corresponding loss of time in changing the batteries or transporting a battery charger unit or several spare batteries, taking into account the relatively long time required to recharged a discharged battery.

Finally, the utility model application ES-A-1056534, owned by the present applicant, proposes a portable debarking machine with first actuation means adapted to drive a cutting organ configured to perform a cut in the bark of a tree at depth; second actuation means adapted to drive a movable stop regulating said depth, with said movable stop disposed to make contact with a surface of said bark; an electrical conductivity sensor disposed inside said cut; a high-conductivity electrical sensor, supported by a handle, which can be inserted in the trunk of said tree to be debarked to the mother bark; an electric power supply powering an electronic circuit with a microprocessor and wiring that connects the two ends of said electronic circuit with said sensor and said needle respectively, with said microprocessor generating a control signal for controlling said second actuation means in order to change the movable stop position in accordance with variations in the electrical conductivity detected by the sensor. The main difference with patent WO 99/41051 is that the electrical conductivity sensor is independent of said cutting organ and is supported in a fixed position close to one distal end of the cutting organ, on the side opposite the direction of advance of same in order to prevent the cutting organ movements from affecting the sensor, which is maintained at a substantially constant distance from the mother bark by the movements of the movable stop with respect to the cutting organ, independently of the type of cutting organ movements. In general, the mentioned fixed sensor position coincides in depth with the position of the distal end of the cutting organ when, for example, the same is of the spade type with a cutting chain, or with the position of the distal end of the cutting organ in a situation of maximum extension when same is, for example, as in patent WO 99/41051, of the type with a rocking motion cutting blade. The purpose of the independence of the sensor with respect to the cutting organ movements is to provide a more precise conductivity reading and greater reliability in cutting depth regulation.

In the machine proposed in said utility model application ES-A-1056534, the power supply and control unit included in the machine are connected, on the one side, to the cutting unit by a multi-wire cable connection and, on the other side, to the needle by a wire. The cutting unit is installed inside a casing fitted with a handle that can be manually gripped by a user, while the power and control unit is installed inside a casing adapted for being placed on the ground or worn on the back of the user.

In all the cited background, and although the proposed machines are more or less portable for a user, there is a clear physical dependence between all the blocks that form them, in the sense that the cutting unit and the needle or needles with electrode functions are physically connected by means of a cable, which limits freedom of movement of the user employing the machine when actually debarking a tree, taking into account that this person has to move within a wood or between various branches.

One objective of this invention is to contribute to overcoming the previous and other drawbacks, by providing a power chain saw that includes improvements with respect to cutting depth regulation reliability, cutting capacity, power supply continuity and regularity and the overall manageability of the entire machine.

Another objective of this machine is that of overcoming the proposals in the state of the art, conserving the existing advantages and overcoming the stated drawbacks and, at the same, offering new advantages, providing a machine of the type described above that facilitates the work of the operator handling it and contributing a greater freedom of movement by eliminating the need for physical connection between the cutting organ and the commented needle.

### Disclosure of the invention

In a first aspect, the present invention provides a debarking module which can be connected to a power chain saw; with said power chain saw of the type comprising a support bar and cutting chain guide and a motor, or power takeoff connected to a motor, in order to drive said cutting chain. The cited module is characterised in that it comprises movable stop means adapted to be coupled to said bar by guide means and disposed to make contact on an exterior surface of the bark of the tree to be debarked. The module also comprises actuation means adapted to move said movable stop means in relation to a distal end of the bar. Finally, the module includes a powered electric or electronic circuit and connection means to connect a first point of said electric or electronic circuit to at least one electro-conductive needle that can be inserted into the trunk of said tree to the mother bark and a second point of the electric or electronic circuit to the bar, which is made of electro-conductive material. In response to variations in the electrical conductivity detected between said needle and the bar, an activation and control signal is generated for said actuation means in order to change the position of the movable stop means in accordance with said variations in order to regulate the penetration depth of said bar.

In a chain saw, the distal end of the bar maintains a regular position, free from rocking motion, which allows more reliable direct conductivity reading than with state-of-the-art devices that use fretsaw blades. Moreover, the cutting chain is made up of metal links in electrical contact together and with the bar, so that the actual cutting chain serves as the conductivity sensor just at the point of maximum cutting depth. In addition, power chain saws often include an automatic chain lubrication system employing oil which, in general, is also electro-conductive and contributes to the electrical contact between the saw links and the bar where it is connected to the electric or electronic circuit.

In a second aspect, the present invention also includes a debarking accessory that can be connected to a power chain saw, which is characterised in that it comprises a debarking module, such as the one described above, connected to a bar adapted to be operationally connected in a interchangeable manner to said power chain saw. In fact, power chain saws or power saws are very popular and fitted with a system that is both simple and easy to use that permits the removal of the bar, for example, for replacement of the chain or the chain and bar assembly, with reinstallation of the same bar or another with similar or different characteristics etc. Thanks to this, the accessory of this present invention can be installed on and removed from a power chain saw in an immediate fashion.

If the accessory is connected to a chain saw fitted with a petrol engine or a power takeoff coupled to a petrol engine to drive the cutting chain, the equivalent of a debarking machine is obtained, with significantly increased cutting capacity compared with state-of-the-art machines driven by and electric motor and only the electric or electronic circuit is necessary, together with a relatively low power electric motor employed as the actuation means to move the mentioned movable stop means. Additionally, given that, in this case, there is not need for any electrical connection between the accessory of the present invention and the power chain saw body to which it is connected, the electric or electronic circuit and one or more power batteries could attached to a belt or other harness to be comfortably worn by the operator.

If the accessory is connected to a chain saw fitted with an electric motor or a power takeoff connected to an electric motor, the electric or electronic circuit and the movable stop drive motor can be powered from the same power supply as the machine.

In accordance with a third aspect, the present invention provides a debarking power chain saw of the type comprising a support bar and cutting chain guide, together with a motor or power takeoff connected to a motor to drive said cutting chain, characterised in that it incorporates a debarking module, such as the one described above, connected to said bar. In the debarking chain saw of the present invention, the bar may be fixed or, as is more common, can be adapted to be operationally connected in an interchangeable fashion to said power chain saw. In this case, the debarking module remains joined to the bar even when it is removed from the saw.

Although not essential, it is preferred that the cutting chain drive motor is a petrol engine, which can be incorporated into a body or chassis that supports the bar and cutting chain assembly, or preferably, it may be installed in an independent chassis and connected by means of a flexible transmission to a power takeoff disposed in the body or chassis that supports the bar and cutting chain assemble, so that the part handled by the user is much lighter.

In accordance with a fourth aspect, the present invention provides a potable debarking machine, with controlled cutting depth, of the type comprising first actuation means adapted to drive a cutting organ, for example, a chain saw, configured to cut into the bark of a tree, in a direction of advance and at a given depth; second actuation means adapted to drive a movable stop that regulates said depth, with said movable stop disposed to make contact with an exterior surface of said bark; at least one electro-conductive element disposed inside said cut at substantially the same depth as the end of said cutting organ, whether independently of the cutting organ or forming part of it; at least one electrode with a piercing end that can be inserted into the trunk of said tree to the mother bark; and a first electronic circuit fed from a first power supply, which controls at least said second actuation means in function of detecting a potential difference and/or current flow, although this is not maintained in time, between said electrode and said electro-conductive element.

The main characteristic of this fourth aspect of the invention is that the debarking machine is divided into first and second, physically separate, modules, with the mentioned first module comprising at least said first and second actuation means, said cutting organ, said movable stop, said electro-conductive element, of which there is at least one, and said first electronic circuit, with the cited second module comprising at least said electrode, of which there is at least one, and a second power supply associated with said electrode, with at least one of said first and/or second power supplies feeding the electro-conductive element in the case of the first power supply and/or electrode in the case of the second power supply.

Various exemplary embodiments are proposed for this fourth aspect of the invention that contemplate powering only the electro-conductive element, only the electrode or providing opposite sign electric powers to both at the same time.

Conductivity detection that is produced when the cutting organ reaches or approaches the subero-phellodermic layer or cell formation layer, is carried after passing through the mother layer also, by means of the present invention, in various ways, depending on the exemplary embodiment, whether by incorporating the detector(s)/sensor(s) in the first module or the second, in which case, a wireless communication system is proposed incorporating a transmitter/receiver assembly between both module to inform the first module when a detection has occurred in the second module and thus be able to operate the second actuation means and hence, the movable stop which will prevent going any deeper than necessary with the cut and thus avoid damaging the mother bark of the tree to be debarked.

### A brief description of the drawings

The previous and other advantages and characteristics will be more fully understood from the following detailed description of exemplary embodiments, with reference to the attached drawings, in which:
Fig. 1 is a side elevation view of a debarking module that can be connected to a power chain saw in accordance with an exemplary embodiment of the present invention facing a bar of said chain saw;
Fig. 2 is a cross-sectional view taken through line II-II of Fig. 2, in direction of the arrows;
Fig. 3 is a cross-sectional view, similar to that of Fig. 2, but of another exemplary embodiment of the present invention;
Fig. 4 is a schematic drawing illustrating the operating principle of the module of the present invention.
Fig. 4A is cross-sectional representation of a portion of a trunk of the tree to be debarked with a cut made by the module, the accessory or saw of the present invention.
Fig. 5 is a perspective view of a debarking accessory which can be connected to a power chain saw, which includes the module of Fig. 1 attached to a bar;
Fig. 6 is a perspective view of a power chain saw in accordance with an exemplary embodiment of the present invention;
Figs. 7A and 7B are partially sectioned, side elevations of the saw of Fig. 6, with the stop means in two different positions;
Fig. 8 is a perspective view of a power chain saw in accordance with another exemplary embodiment of the present invention;
Fig. 9 is a side view that schematically shows an exemplary embodiment of the present improvements;
Fig. 10 is a cross-sectional view taken through plane II-II of Fig. 9;
Fig. 11 is a side view that schematically shows another exemplary embodiment of the present improvements;
Fig. 12 is a cross-sectional view taken through plane IV-IV of Fig. 9;
Fig. 13 is a schematic drawing that shows the configuration of the portable debarking machine in accordance with an exemplary embodiment of the present invention in an operational situation; and
Fig. 14 is a schematic drawing that shows the configuration of the portable debarking machine in accordance with another exemplary embodiment of the present invention in an operational situation.

### Detailed descriptions of some exemplary embodiments

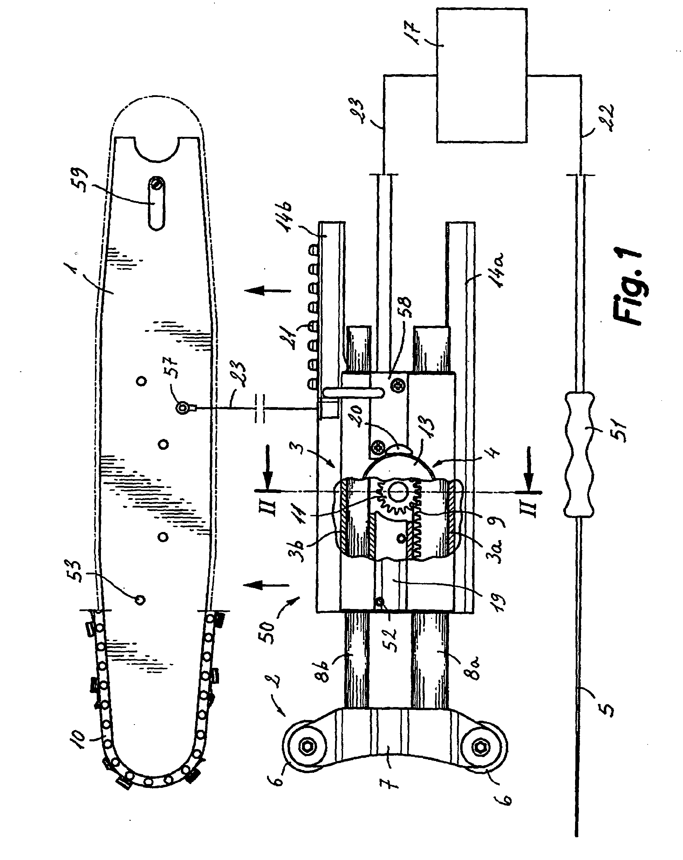

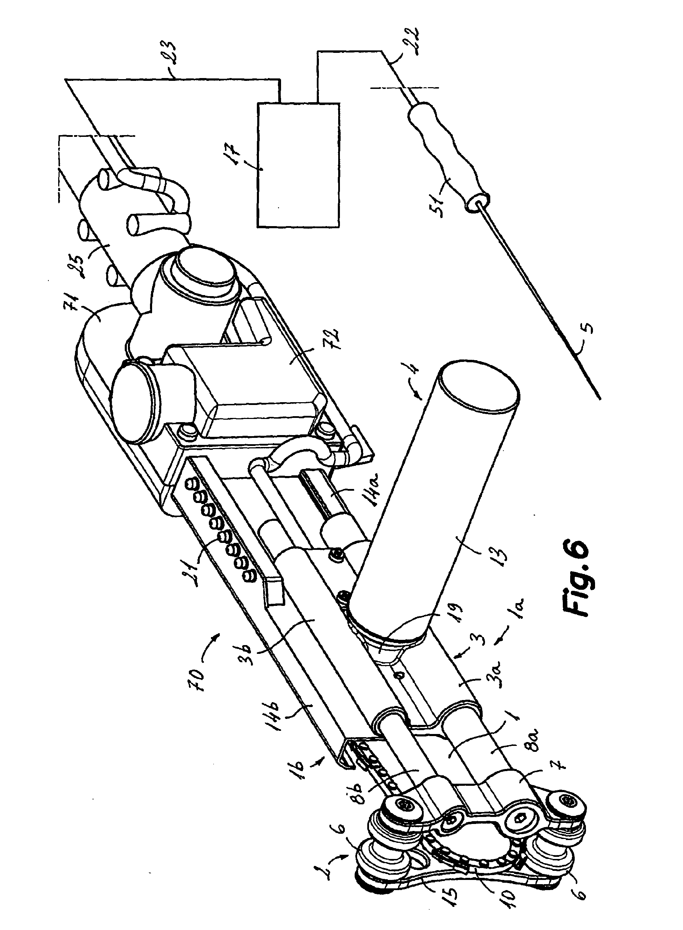

First referring to Fig. 1, reference number 50 shows, in general, a debarking module connected to a power chain saw in accordance with the present invention and next to module 50 is a support bar 1 and cutting chain guide 10 that can form part of said power chain saw, or can include a device 59 to be operationally connected in an interchangeable fashion to the power chain saw. In Fig. 1, the mentioned chain 10 is partially represented by a dot and dash line for enhanced drawing clarity. The mentioned power chain saw, which is shown in Figs. 6 to 8, is the type comprising a bar 1, just as shown in Fig. 1, a cutting chain 10 installed on said bar 1 and a motor 24 or power takeoff 25 that can be connected to a motor in order to drive said cutting chain 10.

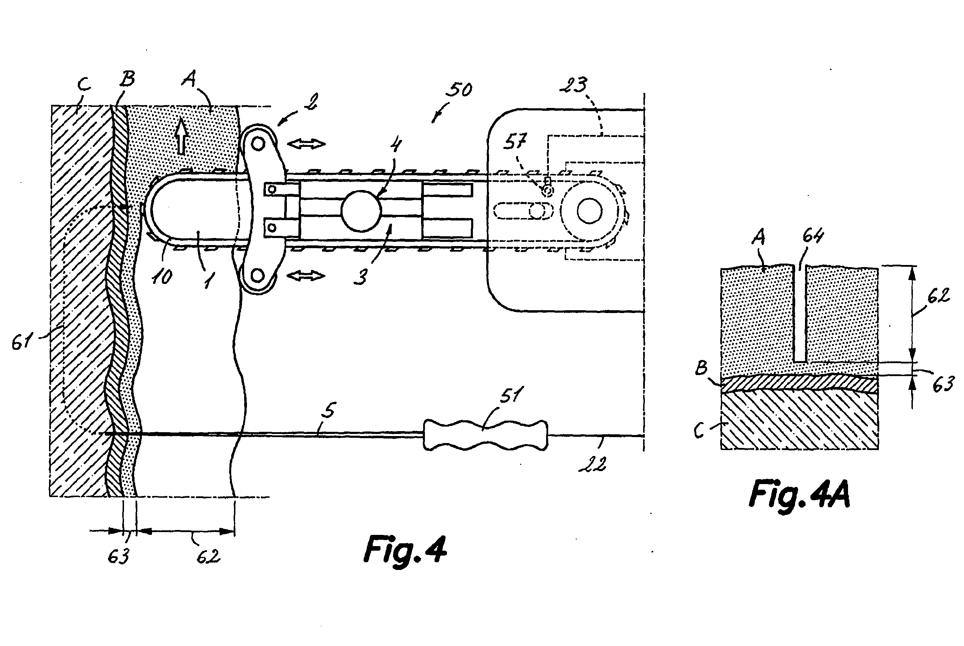

Module 50 comprises movable stop means 2 adapted for coupling to said bar 1 by guide means 3 so that they are disposed to make contact with an exterior surface of bark A of a tree to be debarked (see also Fig. 4). Module 50 also comprises actuation means 4 adapted to move said movable stop 2 means in relation to a distal end of the bar 1. Module 50 is completed with powered electric or electronic circuit 17, fed from a power supply (not shown) and connection means 22, 23 to connect a first point of said electric or electronic circuit 17 to at least one electro-conductive needle 5 that can be inserted into the trunk of said tree to the mother bark B and a second point of the electric or electronic circuit 17 to the bar 1, which is made of electro-conductive material. In the figures, the mentioned connection means 22, 23 comprise conducting wires 22, 23 that connect the circuit 17 to the needle 5 and the bar 1 via a connection point 57. There is a connections box 58 in the support 19 that can include at least part of the circuit 17, and one or more power-supplying batteries (not shown) may be disposed, for example, on a belt worn by the operator.

The electric or electronic circuit 17 is adapted to generate, in response to variations in the electrical conductivity detected between said needle 5 and the bar 1, an activation and control signal for said actuation means in order to change the position of the movable stop means 2 in accordance with said variations in order to regulate the penetration depth of said bar 1. Module operation is described in more detail below in relation to Fig. 4.

In the exemplary embodiment shown in Fig. 1, the movable stop means 2 comprise two rolling elements 6 disposed to roll over said surface of bark A, although it could equally incorporate a single rolling element, or more than two, or one or more skids disposed to slide over the surface of the bark A, with a similar result. The two rolling elements 6 are installed on a support 7, to which overhanging shafts 16 are fixed, on which the rolling elements 6 rotate. Support 7 is fixed to first and second, mutually parallel, bars 8a, 8b, which are inserted in a sliding manner in corresponding guide sleeve 3a, 3b fastened to a support 19 adapted to be secured to a first side 1a of bar 1, for example, screws 52 secured inside corresponding holes 53 in the bar 1. Said first and second guide sleeves 3a, 3b form part of the mentioned guide means 3.

The cited first bar 8a incorporates the teeth of rack 9 meshed with a pinion 11, firmly joined to an output shaft of a geared motor 12 (not shown in Fig. 1) mounted on said support 19 fixed to the first side 1a of the bar 1. A handle 13 is disposed in a position transversal to the bar 1 plane, which has a hollow interior to house the mentioned geared motor 12. Eventually, the mentioned handle 13 can include a safety control 20 connected to the electric or electronic circuit 17 in order to enable or disable operation of said actuation means 4 for the movable stop means 2 and/or said drive motor for the chain 10.

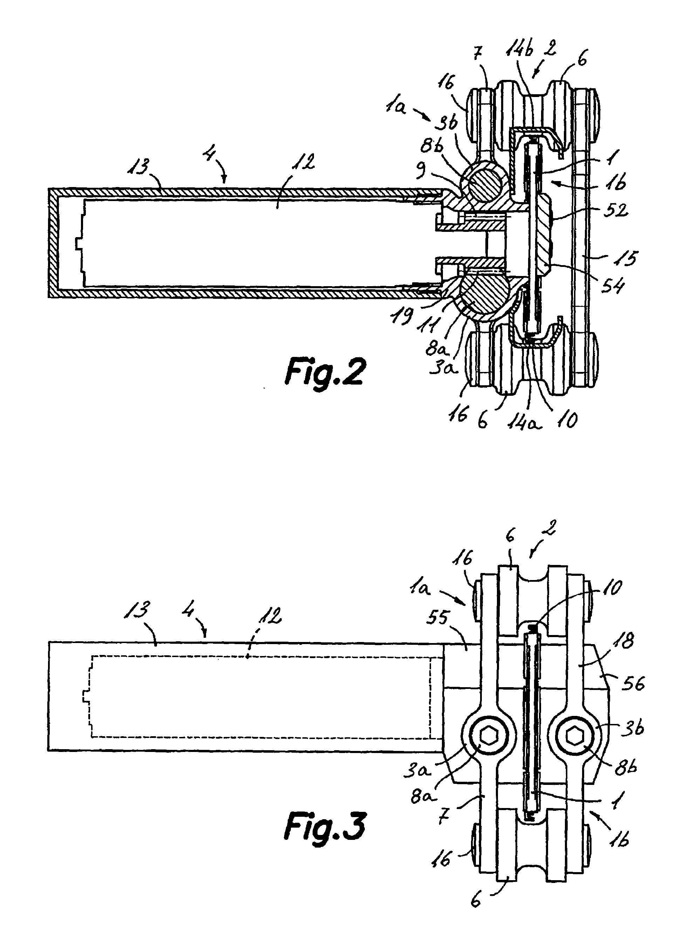

Module 50 also comprises chain protectors in the form of ribbed profiles 14a, 14b (shown in the cross-sectional view of Fig. 2) fixed to said first side 1a of the bar1 to cover opposite sections of said cutting chain 10. The module 50 comprises indication means 21 in a highly visible location, for example, on one of said ribbed profiles 14a, 14b, in order to provide a representative visible indication of the detected level of conductivity between the needle 5 and the bar 1 at all times. These indication means comprise, for example, a row of light-emitting indicators, such as LEDs, connected to switch on in growing number with increasing detected current. Preferably, the light-emitting indicators 21 are of a determine colour, for example, green, and one or more of the final light-emitting indicators 21 in the row are of a different colour, for example, red, to serve an alarm indication representing a detected level of conductivity above a predetermined threshold. There could be intermediate light-emitting indicators of other colours, for example, yellow, for intermediate conductivity levels.

This exemplary embodiment is also illustrated in Fig. 2, in which said support 19 can be appreciated, secured to the first side 1a of the bar 1 by means of the screws 52, which are secured to a plate 54 located on a second side 1b opposite the first side 1a of the bar 1, so that the first and second guide sleeve 3a, 3b are both on the first side 1 a of the bar 1. On the other hand, the mentioned rotating shafts 16 for the two rolling elements 6 are substantially perpendicular to the plane of bar 1 and are disposed substantially centred with said plane of bar 1 and facing said cutting chain 10 on opposite sides of said distal end of the bar 1. A reinforcement plate 15 is fixed at the distal ends of the shaft 16 and which faces, without touching, the second side 1b of the bar 1, so that the second side 1 b is substantially free from obstacles and clear. This, together with the fact that the mentioned ribbed profiles 14a, 14b are open towards said second side 1b of the bar 1, permits cutting chain 10 mounting and dismounting operation to be carried out without having to remove the module.

However, other configurations are possible for the guide means 3. Fig. 3 illustrates an alternative exemplary embodiment in which a first bar 8a is inserted in a sliding fashion in a first guide sleeve 3a and joined to a first support 55 fixed on the first side 1a of the bar 1, while a second bar 8b, parallel to said first bar 8a, is inserted in a sliding fashion in a second guide sleeve 3b and joined to a second support 56 fixed on a second side 1b, opposite said first side 1 a of the bar 1. Both first and second bars 8a, 8b are fixed to respective supports plates 7, 18 and the shafts 16, on which the rolling elements 6 rotate, are fastened by their ends to said supports plates 7, 18. The actuation means 4 and the handle 13 are similar to those described above in relation b to Figs. 1 and 2 and are associated with the first bar 8a and the first support 55, respectively.

Now referring to Fig. 4, the needle 5 is preferably made of high electric conductive metal supported by a handle and can be inserted in the truck C of said tree to be debarked down to the mother bark B. The cited electric or electronic circuit 17 is fed by an electric power supply (not shown) and includes a microprocessor. Wiring 22 connects the circuit 17 to the needle 5 and wiring 23 connects the circuit 17 to the bar 1 which, in turn, establishes electrical contact with cutting chain 10, so that an electric current is produced between the two, as indicated in Fig. 4 by a dotted line arrow 61, which circulates through the mother bark B and the trunk C. The cutting blade 10 acts as a detector and, because the cork is an electrically insulating material, the current detected by the cutting chain 10 will vary in function of its proximity to the mother bark B. The mentioned electronic circuit 17 is adapted to generate a control signal to control said actuation means 4 in order to change the position of the movable stop means 2 in accordance with the variations in electrical conductivity detected by the cutting chain 10, and with this, control the penetration depth 62 of the bar 1 and cutting chain 10 in the cork A. Preferably, the electronic circuit 17 controls said position of the movable stop means 2 in order to provide a safety distance 63 between said distal end of the cutting organ 1 and the mother bark B of the trunk C of the tree being debarked, with said safety distance 63 being regulated by a potentiometer included in said electronic circuit 17.

Fig. 4A shows a cross-sectional view of a cut 64 obtained by a chain saw fitted with a module of the present invention, in which said cut depth 62 and the mentioned safety distance 63 can be better appreciated. The small portion of cork that is not cut in the safety zone ensures the safeguarding of the mother bark B and does not represent any significant obstacle for subsequent removal operations of the cork bark A.

In order to distribute the electrical conductivity in a more uniform manner throughout the trunk of the tree to be debarked, the device preferably includes several of said electro-conductive needles 5, connected by independent wiring to the corresponding end of the electronic circuit 17. The mentioned various needles 5 can be inserted to the mother bark B in different locations on the perimeter of the trunk of the tree to be debarked, so that they minimise any possible differences in electrical conductivity by the distance through the trunk or mother bark.

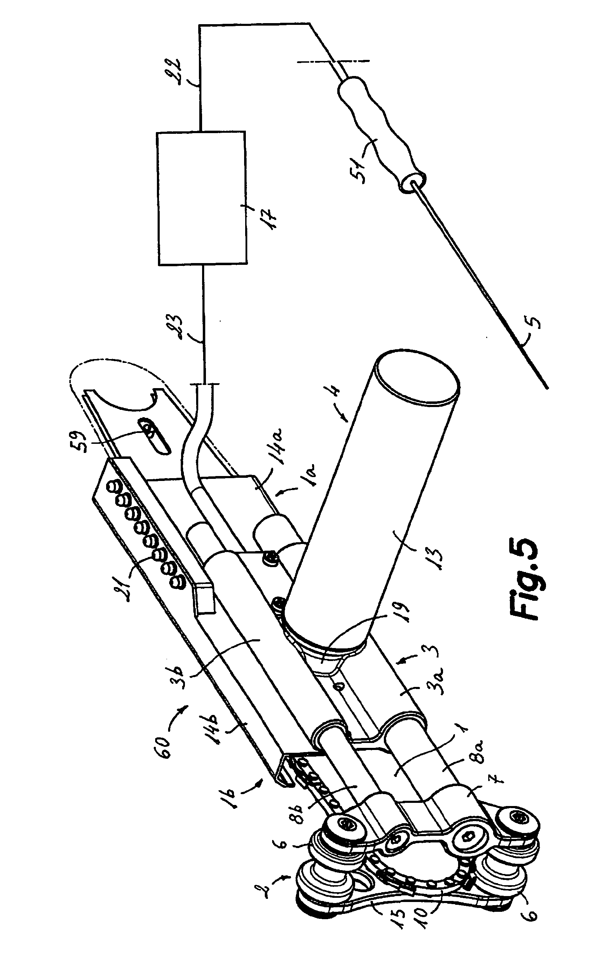

In relation now to Fig. 5, this shows a debarking accessory 60 connected to a power chain saw in accordance with the present invention. The mentioned accessory 60 comprises a debarking module, such as the one described in relation to Figs. 1 and 2 joined to a bar 1 adapted to operationally connected in an interchangeable fashion to said power chain saw. Power chain saws are well-known and widely employed in agricultural and forestry work and comprise a system for installing and removing various interchangeable bars 1 and/or various cutting chains 10 in a quick, simple manner. Usually, the operator of such power chain saws has a set of bars 1 and /or cutting chains 10 of different characteristics to be selected in accordance with the specific work to be carried out. Thus, the accessory 60 of Fig. 5 can be added to said set of bars 1 and with this, the field of application of the power chain saw is extended, for example, to the cutting operations required for bark removal. The debarking module included in accessory 60 has equivalent characteristics to those of the module 50 described above and its description will be omitted.

Fig. 6 shows an exemplary embodiment of a debarking power chain saw 70 comprising a body 71 that holds a support bar 1 and cutting chain guide 10, together with a power takeoff 25 adapted to receive the connection to a flexible mechanical transmission (not shown), in turn connected to a separate drive motor (not shown). This drive motor is, for example, a petrol engine installed inside a casing adapted to worn on the back of the operator like a rucksack by means of straps or belts. The cited power takeoff 25 is connected to a drive pinion on the chain by a drive transmission. An automatic chain lubrication system is disposed in the body 71 and includes a pump (not shown) to drive the oil from an oil tank 72 towards the bar 1 via some pipes.

The bar 1 of cited chain saw 70 may be installed in a more or less permanent fashion, in which case, the saw 70 would incorporate a debarking module, such as the one described in relation with Figs. 1 and 2 joined to the bar, although preferably, the chain saw 70, in addition to said drive pinion, has a system that enables the bar to be installed and removed in a quick, simple manner, in which case the chain saw 70 will incorporate an accessory such as the one described above in relation to Fig. 5.

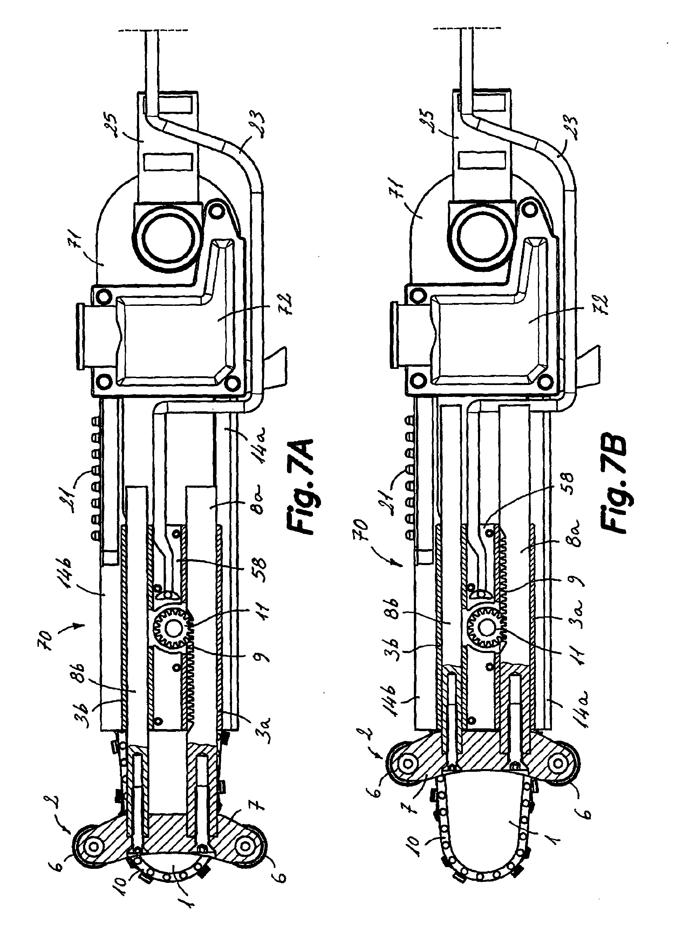

Figs. 7A and 7B are views of the debarking chain saw 70, which are partially sectioned to show the pinion 11 and rack 9 mechanism that actuate the moveable stop means 2 described above in relation to Fig. 1. In Fig. 7A, the moveable stop means 2 are in the position of maximum extension corresponding to a situation of minimum bar 1 and cutting chain 10 penetration, while in Fig. 7B, the moveable stop means 2 are in the position of minimum extension corresponding to a situation of maximum bar 1 and cutting chain 10 penetration. Preferably, the actuation means 4 are activated and controlled to produce the movements of the stop means 2 in direction of the position of maximum extension at a faster speed than the movements in the position of minimum extension in order to provide a fast retraction reaction of the cutting chain 10 when close proximity of the mother bark is detected.

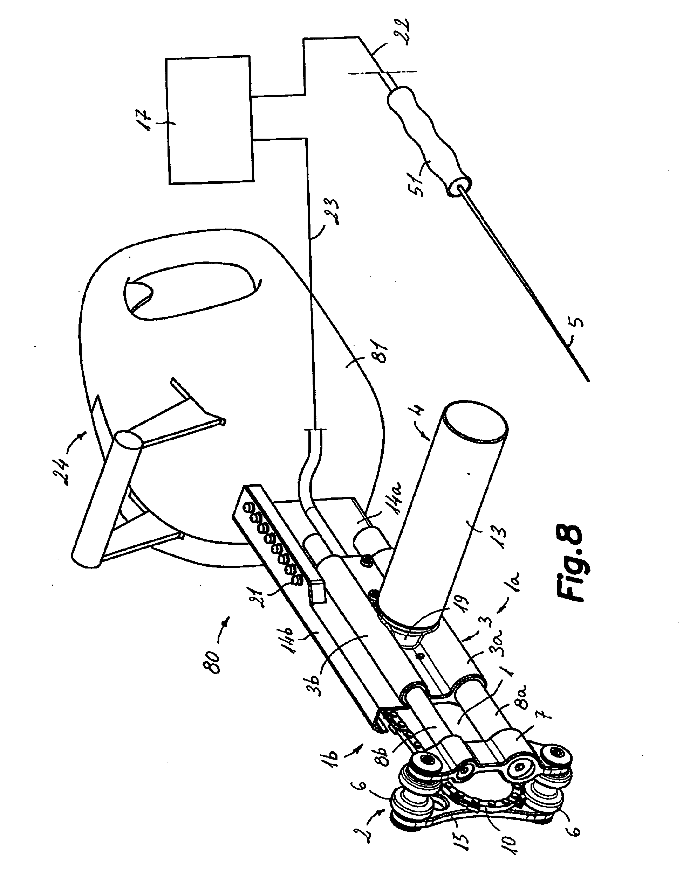

Finally, Fig. 8 shows another exemplary embodiment of a debarking power chain saw 80 comprising a body 81 supporting a support bar 1 and cutting chain 10 guide and which houses an engine 24 disposed to operate a drive pinion of said cutting chain 10 via a drive transmission. This engine 24 driving the cutting chain 10 is, for example, a petrol engine. An automatic chain lubrication system is disposed in the body 81 and includes a pump (not shown) to drive the oil from an oil tank towards the bar 1 via some pipes.

In a similar way as the exemplary embodiment of Figs. 6, 7A and 7B, the bar 1 of cited chain saw 80 may be installed in a more or less permanent fashion, and incorporate a debarking module, such as the one described in relation with Figs. 1 and 2 joined to the bar 1. However, it is preferred as is habitual, that the chain saw 70, in addition to said drive pinion, has a system that enables the bar to be installed and removed in a quick, simple manner, in which case the chain saw 70 will incorporate an accessory such as the one described above in relation to Fig. 5.

A support bar 1 can be seen in the figures, together with a cutting chain 10 that could form part of a power chain saw or which could be operationally and interchangeably connected to a power chain saw by means of a coupling.

The bar 1 and chain 10 could form part of various types of power chain saw.

For example, one type of chainsaw incorporates a support on which the bar 1 is mounted, with the chain 10 and an engine 24, generally a petrol engine, to drive the cutting chain 10. Another type comprises a support on which the bar 1 is mounted with the chain 10 and a power takeoff 25 coupled by means of a flexible connection to a separate motor.

Guide means (not shown) are fixed to one side of the bar 1, on which mutually parallel first and second bars 8a, 8b are installed in a sliding manner. Moveable stop means 2 are fixed to the distal ends of said first and second bars 8a, 8b, comprising at least one skid 96, configures and disposed to make contact with an exterior surface of the bark of the tree to be debarked. Actuation means 4 are adapted to move said moveable stop means 2 in relation to a distal end of the bar 1. Just as described above, the apparatus comprises a powered electric or electronic circuit, for example, by rechargeable batteries and one or more electro-conductive needles that can be inserted into the tree trunk up to the mother bark and connected by flexible wiring to a first point of said electric or electronic circuit. At least one second point of the electric or electronic circuit is connected by other wiring to the bar, which comprises a electro-conductive material electrically connected to the chain 10, which acts as an electrode. In response to variations in the electrical conductivity detected between said one or more needles and the bar 1, an activation and control signal is generated for said actuation means 4 in order to change the position of the moveable stop means 2 in accordance with said variations in order to regulate the penetration depth of said bar 1.

The mentioned skid 96 is applicable to any of the exemplary embodiments described above in replacement of the rolling means.

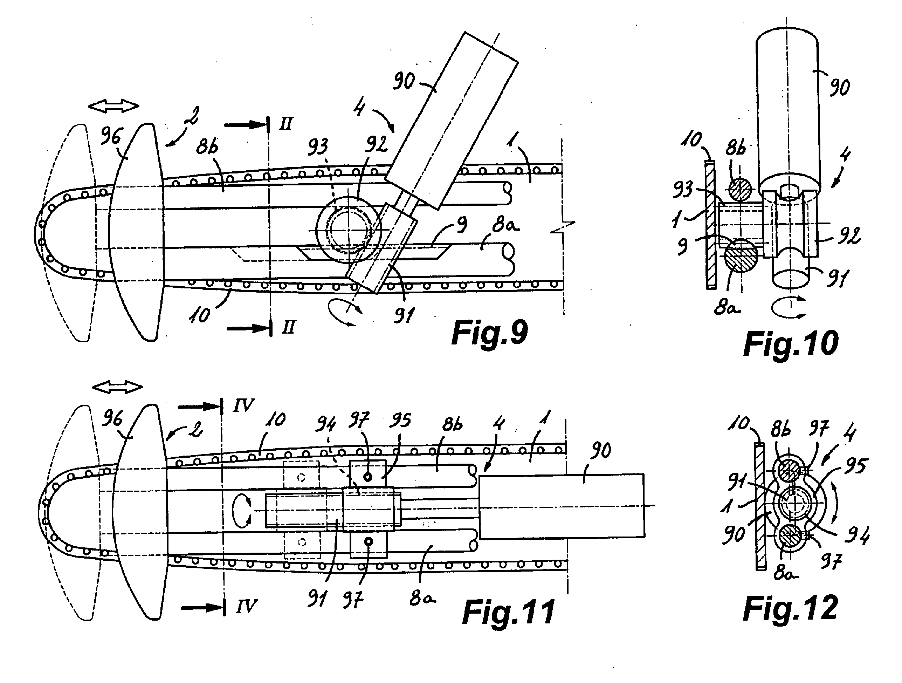

Now specifically referring to Figs. 9 and 10, which show an exemplary embodiment of the present improvements comprising an endless screw 91 connected to a geared motor 90 output shaft. The mentioned endless screw 91 meshes with a first gearwheel 92. This first gearwheel 92 is firmly and coaxially connected to a second gearwheel 93 (Fig. 10), which in turn, meshes with the gear on the rack 9 formed in the first bar 8a to which the moveable stop means 2 are fixed. In this way, rotation of the geared motor 90 in one direction moves the first bar 8a, taking the moveable stop means 2 away from the distal end of the bar 1 (skid 96 position shown in broken lines) and rotation of the geared motor 90 in the opposite direction moves the first bar 8a, taking the moveable stop means 2 towards the distal end of the bar 1 (skid 96 position shown in broken lines).

The second bar 86, which is not essential, is linearly guided by the mentioned guide means in a direction parallel to the first bar 8a and is disposed on the same side of bar 1 as the first bar 8a, although it could be disposed on the opposite side, in accordance with an exemplary embodiment described above.

Figs. 11 and 12 show another exemplary embodiment of the present improvements where the endless screw 91 connected to the output shaft of the geared motor 90 is meshed with a nut 94 formed in a fixed part 95, for example, by a screw 97, to the first bar 8a. With this, rotation of the geared motor 90 in one or the other directions moves the first bar 8a the moveable stop means 2 away from the distal end of the bar 1 or bringing it closer. Although, a second bar 8b fixed to the moveable stop means 2 is not essential, it is preferable to incorporate the second bar 8b, linearly guided in a direction parallel to the first bar 8a and disposed on the same side of the bar 1, so that said part 95 can also be fixed to said second bar 86, for example, by another screw 97. In this exemplary embodiment, the geared motor 90 has its output shaft parallel to the direction of movement of the first and second bars 8a, 8b, and as shown in Fig. 12, it can adopt a position backed onto the bar 1 between the first and second bars 8a, 8b and occupying minimum space.

In Figs. 9 to 12, the guide means for the first and second bars 8a, 8b have been omitted because they have described and shown above. For better drawing clarity, the securing means for geared motor 90, and the mounting of the first and second gearwheels 92, 93 are not shown either, which will be quite evident to those skilled in the art. It is, however, important to indicate that, both the guide means for the first and second bars 8a, 8b and the securing means for geared motor 90, and the mounting of the first and second gearwheels 92, 93 are adapted for fixing to the bar 1 and can equally form part of the module, the accessory or the chain saw described above.

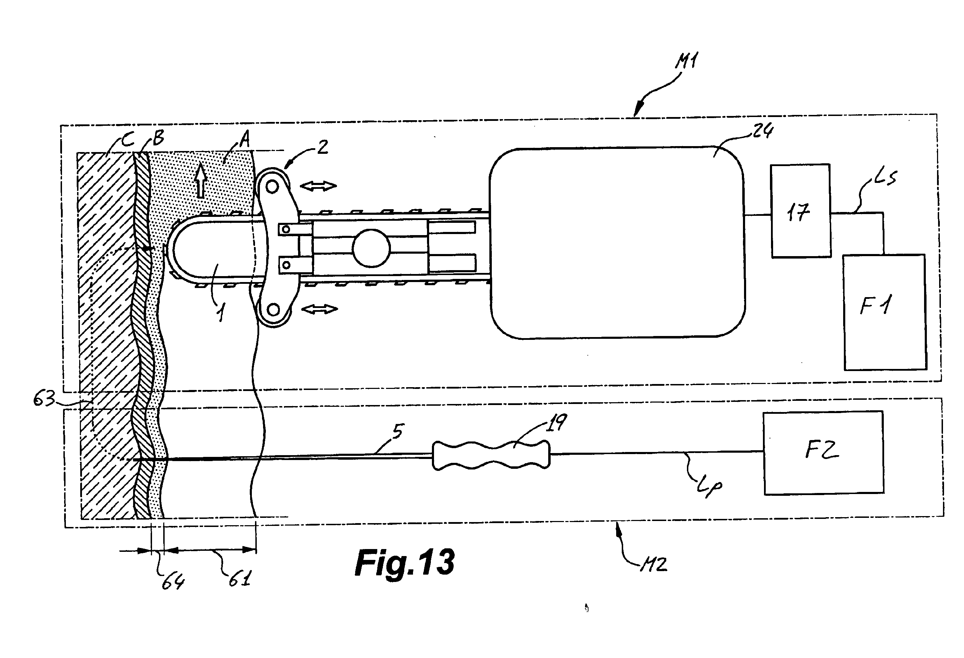

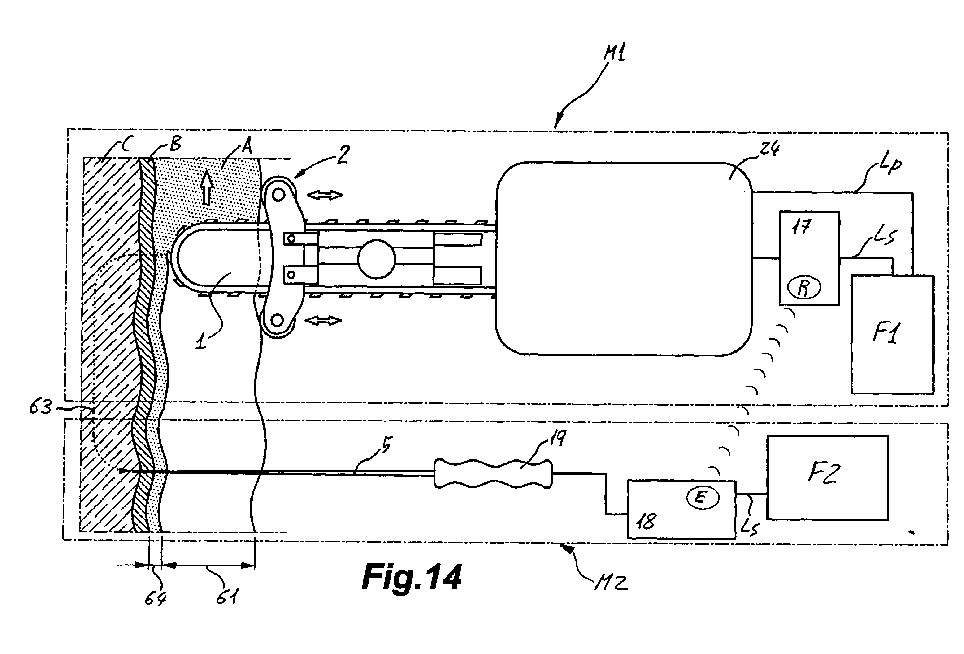

Now referring to Figs. 13 and 14, the portable debarking machine with controlled cutting depth proposed by the present invention comprises:
first drive means adapted to actuate a cutting organ 1 (in this example, a chain saw), configured to cut into the bark A of a tree, in a direction of advance and at a predetermined depth;
second drive means adapted to actuate a moveable stop 2 regulating said depth, with said moveable stop 2 disposed to make contact with an exterior surface of said bark A;
at least one electro-conductive element disposed inside said cut at substantially the same depth as the end of said cutting organ 1;
at least one electrode 5, with a fine, sharp end, which can be inserted into the trunk of said tree to the mother bark B;
a first electronic circuit 17 fed from a first power supply F1, which controls at least said second drive means in function of detecting a potential difference and/or a current flow 63 between said electrode 5 and said electro-conductive element.

The machine is divided into a first M1 and a second M2 physically separate modules module, with the mentioned first module M1 comprising said first and second drive means, said cutting organ 1, said moveable stop 2, said electro-conductive element and said first electronic circuit 17 and the cited second module M2 comprising said electrode 5 and a second power supply F2 associated with said electrode 5.

Figs. 13 and 14 schematically represent a block 24, comprising, among others, the first and second drive means, preferably formed by electric motors or petrol engines, together with the corresponding mechanical drive transmissions of any known type. For an exemplary embodiment, the first power supply F1 is an electric generator to operate the second drive means and the cutting organ is actuated by a petrol engine, with said generator able to be associated with a battery or other suitable configuration.

Figs. 13 and 14 similarly represent the electrode 5 as a needle 5 with high electrical conductivity, supported in a handle 19 for manipulation and protection of the operator against the power circulating through needle 5, although it could have another shape provided it can penetrate to the mother bark B of the tree.

For an exemplary embodiment (not shown, but described in the cited utility model ES-A-1 056534), the electro-conductive element is independent of the cutting organ 1 and is supported in a fixed position next to a distal end of the cutting organ 1 on the side opposite the direction of advance of same.

However, Figs. 13 and 14 show preferred exemplary embodiments in which the electro-conductive element forms part of the said cutting organ 1, in fact it can be the same cutting organ 1 or part of it. In this way, it ensures that there is no difference, however small, between the moment when electric conduction commences or the detection of the same, when the cutting organ 1 approaches the mother bark B and the moment when the cut reaches the position that provokes said conduction or said detection, with the moveable stop 2 acting immediately and in a fast, efficient manner to prevent any damage to the cork generating layer of the tree.

Although the illustrated exemplary embodiments show the cutting organ 1 as a chain saw, this could be any other type deemed suitable.

In order to achieve the commented electrical conduction, it is proposed that at least one of said first F1 and/or second F2 power supplies are responsible for supplying power to the electro-conductive element, in the case of the first power supply F1, and/or to electrode 5 in the case of the second power supply F2.

In Figs. 13 and 14, the lines that transmit the power from the power supplies F1, F2 are indicated as Lp and those responsible for only supplying an electronic circuit as Ls.

For a first exemplary embodiment shown in Fig. 13, said first power supply F1 only feeds said first electronic circuit 17 and said second power supply F2 provides power for the electrode 5, producing circulating current, at least initially, between the electrode 5 and the electro-conductive element (in the direction shown by the arrow in Fig. 13), in this case the cutting organ 1.

In this case, the second power supply F2 preferably comprises a battery associated with a monitoring circuit for same, together with an indicator device for at least the charge threshold for said battery connected to said circuit. This is of particular significance because since the second module M2 is independent from the first M1 and does not depend on this for powering the electrode 5, in addition to obviously working with a high quality and very reliable battery, it is necessary to constantly monitor its state of health and charge and to provide the operator handling the debarking machine with the results of this monitoring in order for the latter to change the battery when this is discharged or becomes damaged for one or another reason. Said indicator device may be visual or acoustic in order to facilitate the operator the detections of its activation, even when the operator has left the electrode 5 inserted on one side of the tree and the rest of the second module M2 close to it and is carrying the first module M1 to the other side of the tree without being able to see the second module M2. For another exemplary embodiment, not shown, but very similar to that of Fig. 13, it is possible that the cited first power supply F1, in addition to feeding said first electronic circuit 17, to provide power to the electro-conductive element of opposite polarity to that of the electrode 5.

In both cases, the detection that the cutting organ 1 that defines the electro-conductive element is approaching the mother bark B is performed in the first module M1, for which reason the first electronic circuit 17 is suitable for detecting the mentioned potential difference and/or the mentioned current flow 63 between the electrode 5 and the electro-conductive element. For this reason, the first electronic circuit 17 comprises at least one voltage detector and/or at least one current sensor in order to perform at least one of said detections.

Fig. 14 illustrates another exemplary embodiment which, maintaining the physical separation between the two modules M1, M2, differs a little in the functions to be performed by each one. Specifically, for this exemplary embodiment, the detection that the cutting organ 1 that defines the electro-conductive element is approaching the mother bark B is performed in the second module M2, for which reason this comprises a second electronic circuit 18 fed from the second power supply F2 (via line Ls in Fig. 14).

For this exemplary embodiment, the first power supply F1, in addition to feeding said first electronic circuit 17, also provides power to the electro-conductive element (see Fig. 14) and the current flow 63 is in the direction indicted by the arrow in Fig. 14, although it is also possible, for another exemplary embodiment to provide power of opposite polarity to the electrode 5 from the first power supply F1 (this is not illustrated).

In order to perform said detection, the second electronic circuit 18 is able to detect said potential difference and/or said current flow 63 between the electrode 5 and the electro-conductive element, so that it comprises at least one voltage detector and/or at least one current sensor in order to detect said current flow 63.

Since said detection is used to activate the second drive means which, in turn actuate the moveable stop 2 that regulates the cutting depth, they must informed of the detection. For this reason, the second electronic circuit 18 is able to transmit the result of the detection to the first electronic circuit 17 (in the first module M1) by radiofrequency, with the second electronic circuit 18 similarly able to receive said result, with a transmitter E installed to carry out this transmission and the first electronic circuit 17 comprises a receiver R to perform said reception. In order to achieve said wireless communication, the transmitter E and receiver R can operate by radiofrequency, infrared, radar or any other system deemed suitable.

Both Figs. 13 and 14 show part of a tree, specifically a cork oak, with the trunk C, mother bark B and bark A, or cork in the case of the cork oak. Since cork is an electrically insulating material, the current to circulate through the mother bark B and the trunk C will vary in function of the proximity of the cutting organ1 to the mother bark B (a principle fully described in cited patent ES-A-2113823).

The electronic circuit responsible for carrying out the detection of the electrical conductivity, whether the first 17 or the second 18, depending on the exemplary embodiment, is preferably adapted to control the position of moveable stop 2 in order to provide a safety distance 64 between the distal end of cutting organ 1 and the mother bark B of the tree trunk that is being debarked, with said distance being regulated by, for example, a potentiometer or other adjustment device included in the electronic circuit 17, 18.

The sufficient depth for removal of the cork A from the tree without damaging the cambium or mother bark B, which is located between the cork A and the trunk C is indicated as 61 in Figs. 13 and 14, which respects mentioned safety distance 64.

In order to distribute the electrical conductivity in a more uniform manner throughout the entire perimeter of the tree to be debarked, the second module M2 preferably includes several of said electrodes 5 that can be inserted up to the mother bark B in various positions on the perimeter of the tree trunk C to be debarked, so that any possible interferences in conductivity produced by the distance through the truck C or the mother bark B are minimised.

The specific exemplary embodiment in relation to which the present invention has been described merely have illustrative and non-limiting characters and those skilled in the art would be able to produce variations and modifications without departing from the scope of the invention in accordance with that defined in the attached claims.

## Claims

1. Debarking module which can be connected to a power chain saw, with said power chain saw of the type comprising a support bar (1) and cutting chain (10) guide and a motor (24) or power takeoff (25) which can be connected to a motor to drive said cutting chain (10), where said module is **characterised in that** it comprises:
moveable stop means (2) adapted to be coupled to said bar (1) by guide means (3) and disposed to make contact on an exterior surface of the bark (A) of a tree to be debarked;
actuation means (4) adapted to move said moveable stop means (2) in relation to a distal end of the bar (1).
a powered electric or electronic circuit (17) and connection means (22, 23) to connect a first point of said electric or electronic circuit (17) to at least one electro-conductive needle (5) that can be inserted into the trunk of said tree to the mother bark (B) and a second point of the electric or electronic circuit (17) to the bar (1), which is made of an electro-conductive material.
generating in response to variations in the electrical conductivity detected between the said needle (5) and the bar (1), an activation and control signal for said drive means in order to change the position of the moveable stop means (2) in accordance with said variations in order to regulate the penetration depth of said bar (1).

2. A module in accordance with claim 1, **characterised in that** the moveable stop means (2) comprise at least one rolling element disposed to roll over said surface of the bark (A).

3. A module in accordance with claim 2, **characterised in that** the moveable stop means (2) comprise at least two rolling elements (6) disposed to roll over said surface of the bark (A).

4. A module in accordance with claim 3, **characterised in that** said two rolling elements (6) are mounted on a support (7) fixed to at least one first bar (8a) inserted in a sliding manner into a first guide sleeve (3a) secured to a first side (1 a) of the bar (1), with said first guide sleeve (3a) forming part of the mentioned guide means (3).

5. A module in accordance with claim 4, **characterised in that** said support (7) is fastened to a second bar (8b), parallel to said first bar (8a), inserted in a sliding manner into a second guide sleeve (3b) secured to said first side (1 a) of the bar (1), with said second guide sleeve (3b) forming part of the mentioned guide means (3).

6. A module in accordance with claim 5, **characterised in that** shafts (16) on which the rolling elements (6) are secured overhanging the support (7) and the ends of said shafts (16) are fixed to a reinforcement plate (15) facing, without making contact, a second side (1b) of the bar (1), opposite said first side (1a).

7. A module in accordance with claim 5, **characterised in that** it comprises chain protectors in the form of ribbed profiles (14a and 14b) secured to said first side (1a) of bar (1) in order to cover opposite section of said cutting chain (10), with said ribbed profiles (14a, 14b) open towards a second side (1 b) opposite said first side (1a) of the bar (1) to facilitate the removal of the cutting chain (2).

8. A module in accordance with claim 4, **characterised in that** shafts (16) on which the rolling elements (6) rotate are fixed in an overhanging fashion to the support (7) and a plate (18) is secured to the ends of said shafts (16) and, in turn it is fixed to a second bar (8b), parallel to said first bar (8a), inserted in a sliding manner into a second guide sleeve (3b) fixed to a second side (1b) opposite said first side (1a) of the bar (1), with said second guide sleeve (3b) forming part of the mentioned guide means (3).

9. A module in accordance with claim 5 or 8, **characterised in that** the rotating shafts (16) for the two rolling elements (6) are substantially perpendicular to the plane of bar (1) and are disposed substantially centred with said plane of bar (1) and facing said cutting chain (10) on opposite sides of said distal end of the bar (1).

10. A module in accordance with claim 4, **characterised in that** said first bar (8a) has a rack gear (9) meshed with a pinion (11) joined to of a geared motor (12) output shaft, installed on a support (19) fixed on said first side (1a) of the bar (1).

11. A module in accordance with claim 10, **characterised in that** it comprises a handle (13) disposed in a position transversal to the plane of bar (1), with the mentioned geared motor (12) housed inside a hollow interior of said handle (13).

12. A module in accordance with claim 11, **characterised in that** said handle (13) incorporates a safety control (20) connected to the electric or electronic circuit (17) in order to enable or disable operation of said drive means (4) for the moveable stop means (2) and/or said chain drive motor (10).

13. A module in accordance with claim 1, **characterised in that** it comprises indication means to provide a visual indication representing the level of electrical conductivity detected between the needle (5) and the bar (1) at all times.

14. A module in accordance with claim 12, **characterised in that** said indication means comprise several light-emitting indicators (21), among which is included at least one alarm indication representing a level of conductivity exceeding a predetermined threshold.

15. A module in accordance with claim 1, **characterised in that** it comprises several said electro-conductive needles (5) connected to the corresponding point on the electric or electronic circuit (17), with said several needles (5) able to be inserted up to the mother bark (B) in various positions of the trunk of the tree to be debarked in order to minimise any possible difference sin conductivity produced by the distance through the trunk or mother bark.

16. A debarking accessory which can be connected to a power chain saw, **characterised in that** it comprises a debarking module in accordance with any one of claims 1 to 15, connected to a bar (1) adapted to be operationally connected in an interchangeable fashion to said power chain saw.

17. Debarking power chain saw of the type comprising a support bar (1) and cutting chain (10) guide and a motor (24) or power takeoff (25) which can be connected to a motor to drive said cutting chain (10), **characterised in that** it incorporates a debarking module in accordance with any one of claims 1 to 15, connected to said bar (1).

18. Debarking power chain saw of the type comprising a support bar (1) and cutting chain (10) guide and a motor (24) or power takeoff (25) which can be connected to a motor to drive said cutting chain (10), **characterised in that** it incorporates a debarking accessory in accordance with claim 16.

19. A module in accordance with claim 1, **characterised in that** said actuation means (4) comprise a geared motor (90) with an output shaft to which an endless screw (91) is connected by geared means to at least the first bar (8a) to which the moveable stop means (2) are secured to move the moveable stop means (2).

20. A module in accordance with claim 19, **characterised in that** said endless screw (91) is meshed with a first gearwheel (92) that is coaxially and jointly connected to a second gearwheel (93), in turn meshed with a rack (9) gear formed on the first bar (8a) to which the moveable stop means (2) are fixed, so that rotation of the geared motor (90) in one or the other direction moves the first bar (8a) taking the moveable stop means (2) away from the distal end of the bar (1) or bringing them closer.

21. A module in accordance with claim 20, **characterised in that** it comprises a second bar (8b) linearly guided in a direction parallel to the first bar (8a), with the moveable stop means (2) also secured to said second bar (8b).

22. A module in accordance with claim 21, **characterised in that** the second bar (8b) is disposed on the same side of the bar (1) as the first bar (8a).

23. A module in accordance with claim 19, **characterised in that** said endless screw (91) is meshed with a nut (94) formed on a part (95) fixed to the first bar (8a) to which the moveable stop means (2) are fixed, so that rotation of the geared motor (90) in one or the other direction moves the first bar (8a) taking the moveable stop means (2) away from the distal end of the bar (1) or bringing them closer.

24. A module in accordance with claim 23, **characterised in that** it comprises a second bar (8b) linearly guided in a direction parallel to the first bar (8a), and disposed on the same side of the bar (1), with the moveable stop means (2) also secured to said second bar (8b) and with said part (95) also secured to said second bar (8b).

25. Module, improvements, in accordance with claim 19, **characterised in that** said geared motor (90) has its output shaft located in a plane parallel to the plane of the bar (1).

26. Module, improvements, in accordance with claim 19, **characterised in that** the moveable stop means (2) comprise at least one skid (96)

27. A portable debarking machine, with controlled cutting depth of the type comprising:
first drive means adapted to actuate a cutting organ (1), configured to cut into the bark (A) of a tree, in a direction of advance and at a predetermined depth;
second drive means adapted to actuate a moveable stop (2) regulating said depth, bidirectionally moving a cutting organ support body, with said moveable stop (2) disposed to make contact with an exterior surface of said bark (A);
at least one electro-conductive element disposed inside said cut at substantially the same depth as the end of said cutting organ (1);
at least one electrode (5) with a sharp end that can be inserted into the tree trunk to the mother bark (B), to reach the cork generating or subero-phellodermic layer.
a first electronic circuit (17) fed from a first power supply (F1), which controls at least said second drive means in function of detecting a potential difference and/or a current flow (63) between said electrode (5) and said electro-conductive element.
**characterised in that** it is divided into physically separate first (M1) and second (M2) modules,
with the mentioned first module (M1) comprising at least said first and second drive means, said cutting organ (1), said moveable stop (2), said electro-conductive element, of which there is at least one and said first electronic circuit (17),
and with the cited second module (M2) comprising the electrode (5) and a second power supply (F2) associated with the electrode (5), with at least one of said first (F1) and/or second (F2) power supplies responsible for supplying power to the electro-conductive element, in the case of the first power supply (F1), and/or to electrode (5) in the case of the second power supply (F2).

28. A machine in accordance with claim 27, **characterised in that** said first power supply (F1) only feeds said first electronic circuit (17) and said second power supply (F2) provide power to the electrode (5).

29. A machine in accordance with claim 27, **characterised in that** said first power supply (F1), in addition to feeding said first electronic circuit (17), also provides power of a determined polarity to the electro-conductive element.

30. A machine in accordance with claim 29, **characterised in that** said second power supply (F2), provides power to the electrode (5) of opposite polarity to said determined polarity of the power supplied to the electro-conductive element.

31. A machine in accordance with claim 28 or 30, **characterised in that** the second power supply (F2) comprises a battery associated with a monitoring circuit for same, together with an indicator device for at least the charge threshold for said battery connected to said circuit.

32. A machine in accordance with claim 28, 29 or 30, **characterised in that** said first electronic circuit (17) is suitable for detecting said potential difference and/or current flow (63) between the electrode (5) and the electro-conductive element.

33. A machine in accordance with claim 28, 29 or 30, **characterised in that** said first electronic circuit (17) comprises at least one voltage detector and/or at least one current sensor to detect said current flow (63).

34. A machine in accordance with claim 29 or 30, **characterised in that** the second module (M2) also comprises a second electronic circuit (18) powered from the second power supply (F2).

35. A machine in accordance with claim 34, **characterised in that** the second electronic circuit (18) is suitable for detecting said potential difference and/or current flow (63) between the electrode (5) and the electro-conductive element and for transmitting the result of said detection to said first electronic circuit (17) by radiofrequency, with the second electronic circuit (18) similarly suitable for receiving said result.

36. A machine in accordance with claim 35, **characterised in that** the second electronic circuit (18) comprises at least one voltage detector and/or at least one current sensor to detect said current flow (63) and a transmitter (E) to perform said transmission and the first electronic circuit (17) comprises a receiver (R) to perform said reception.

37. A machine in accordance with claim 36, **characterised in that** said transmitter (E) and receiver (R) operate by radiofrequency.

38. A machine in accordance with claim 36, **characterised in that** said transmitter (E) and receiver (R) operate by infrared.

39. A machine in accordance with claim 36, **characterised in that** said transmitter (E) and receiver (R) operate by radar.

40. A machine in accordance with claim 27, **characterised in that** the electro-conductive element is independent of said cutting organ (1) and is supported in a fixed position next to a distal end of the cutting organ (1) on the side opposite the direction of advance of same.

41. A machine in accordance with claim 27, **characterised in that** the electro-conductive element forms part of said cutting organ (1).
